# EUROPÄISCHE PATENTSCHRIFT

(11) **EP 2 920 603 B1**
(45) Veröffentlichungstag und Bekanntmachung des Hinweises auf die Patenterteilung: **17.07.2019**
(21) Anmeldenummer: 13823921.5
(22) Anmeldetag: 06.11.2013
(51) Int. Cl.: G01S 3/784, G01S 7/48, G01J 1/04, G01J 1/42

(54) **SENSOR ZUR ERKENNUNG UND LOKALISIERUNG VON LASERSTRAHLUNGSQUELLEN**
SENSOR FOR DETECTING AND LOCALISING LASER BEAM SOURCES
CAPTEUR DE DÉTECTION ET DE LOCALISATION DE SOURCES DE RAYONNEMENT LASER

(30) Priorität: 14.11.2012 DE 102012022258
(43) Veröffentlichungstag der Anmeldung: 23.09.2015
(73) Patentinhaber: HENSOLDT Sensors GmbH, 82024 Taufkirchen (DE)
(72) Erfinder: GÜHNE, Tobias, D-81667 München (DE)
(74) Vertreter: LifeTech IP Spies & Behrndt Patentanwälte PartG mbB
(86) Internationale Anmeldenummer: PCT/DE2013/000656
(87) Internationale Veröffentlichungsnummer: WO 2014/075652

(56) Entgegenhaltungen:
- DE-A1- 19 851 010
- DE-A1-102007 024 051
- DE-A1-102011 015 478
- US-A- 5 227 859
- US-A- 6 118 119
- JÖRGEN BENGTSSON: "Kinoforms Designed to Produce Different Fan-Out Patterns for Two Wavelengths", APPLIED OPTICS, Bd. 37, Nr. 11, 10. April 1998 (1998-04-10), Seite 2011, XP055114015, ISSN: 0003-6935, DOI: 10.1364/AO.37.002011

## Beschreibung

Die Erfindung betrifft einen Sensor zur Erkennung und Lokalisierung von Laserstrahlungsquellen nach dem Oberbegriff des Patentanspruchs 1.

Lasergeräte werden im militärischen Bereich für unterschiedliche Zwecke eingesetzt. Zum Schutz und zur Einleitung von Gegenmaßnahmen sind Sensoren erforderlich, die Laserquellen frühzeitig und sicher entdecken und lokalisieren können. Derartige Sensoren sind z. B. aus den Anmeldungen DE 33 23 828 C2 und DE 35 25 518 C2 , welche zur Detektion und Lokalisierung von Pulslaserquellen wie sie z. B. für Entfernungsmesser, Zielbeleuchter oder Blendlaser verwendet werden, sowie aus der EP 0283538 A1, die zusätzlich auch die Strahlung von modulierten Dauerstrichlasern z. B. die von Laserstrahlreiterwaffen erfassen kann, bekannt.

In der weiteren Patentanmeldung DE 102007024051 A1 werden optische Beugungselemente in eine Optik integriert und zur Detektion von Laserstrahlung genutzt. Das entstehende Beugungsbild wird auf einer Bildfeldmatrix abgebildet. Dabei sorgt das optische Beugungselement für die Beugung sämtlicher einfallender optischer Strahlung in mehrere Ordnungen. Es wird jede Wellenlänge mit einem anderen Winkel gebeugt, der mit der Wellenlänge steigt. Dabei wird das kohärente Licht eines Lasers in ein Punktmuster gebeugt, während inkohärentes breitbandiges Licht spektral aufgeweitet wird und in der Bildebene Streifen bildet, die radial vom ungebeugten Bildpunkt der Lichtquelle (0. Ordnung) wegführen. Das durch die Laserstrahlung erzeugte Punktmuster (z.B. in Form eines Gitters) skaliert in seiner Größe (z.B. Abstand der Gitterpunkte) mit der Wellenlänge.

Über eine Bildauswertealgorithmik wird das Beugungsbild identifiziert. Auf diese Weise können Laserquellen von spektral breitbandigen Quellen unterschieden werden. Zusätzlich lassen sich über die Lage der Beugungsordnungen auf der Bildfeldmatrix, also (x,y)-Pixelkoordinaten, sowie über den Punktabstand der Beugungsordnungen Position und Wellenlänge des Lasers bestimmen.

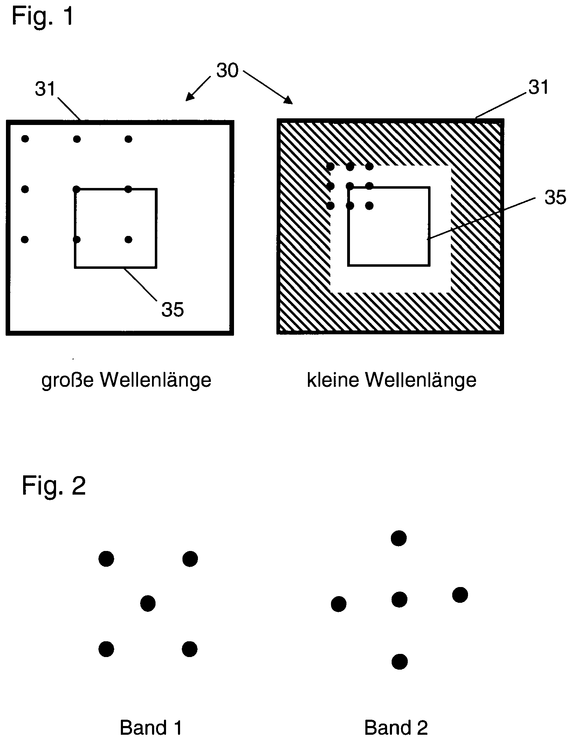

Die Tatsache, dass sich das Beugungsmuster in Abhängigkeit von der Wellenlänge vergrößert, hat jedoch deutliche Nachteile für das Systemdesign eines Sensors zur Erkennung von Laserstrahlungsquellen. Dies wird anhand Fig. 1 näher erläutert. Dargestellt sind zwei gitterartige Beugungsmuster bestehend aus jeweils neun Punkten, die jeweils auf der Bildfeldmatrix 31 eines Detektors 30 abgebildet sind. Im linken Bild ist das Beugungsmuster bei maximaler Laserwellenlänge zu sehen, im rechten Bild bei minimaler Wellenlänge (die Angaben "minimal" und "maximal" sind bezogen auf den operativen Wellenlängenbereich des Sensors). Der Bereich des Gesichtsfelds 35 des Sensors stellt denjenigen Ausschnitt des Detektors dar, in dem sich die 0. Ordnung der Laserquelle in der zu überwachenden Szene bewegen kann und noch für alle Wellenlängen des betreffenden Wellenlängenbereichs ein komplettes Beugungsbild auf dem Detektor 30 hinterlässt.

Wie man aus der Fig. 1 erkennt, würde der zentrale, nicht schraffierte Bereich des Detektors für die Darstellung des kompletten Beugungsbilds bei Einfall der minimalen Wellenlänge genügen. Der umgebende, schraffierte Bereich der Bildfeldmatrix ist zusätzlich notwendig, um das komplette Beugungsmuster für sämtliche Laserwellenlängen, die sich im Gesichtsfeld 35 des Sensors befinden, abbilden zu können.

Man erkennt, dass sich das Verhältnis zwischen Gesichtsfeld des Sensors und der Gesamtfläche der Bildfeldmatrix immer weiter reduziert wird, je größer der spektrale Arbeitsbereich des Sensors gewählt wird.

Setzt man als Bedingung, dass eine minimale Fläche für die Abbildung des Gesichtsfelds 35 des Sensors nicht unterschritten werden soll, so muss in der Konsequenz die Gesamtfläche des Detektors entsprechend vergrößert werden, um die Abdeckung eines großen spektralen Bereichs zu ermöglichen.

Daraus ergibt sich: Die Bildfeldmatrix muss entsprechend groß ausgelegt werden, um die gesamte Bandbreite der relevanten Wellenlängen abzudecken. Das Gesichtsfeld 35 des Sensors nutzt nur einen kleinen Ausschnitt der gesamten Bildfeldmatrix, der Rest der Detektorfläche muss für die Abbildung der Beugungsordnungen vorgehalten werden. Der für das Gesichtsfeld nicht nutzbare Anteil ist umso größer, je größer der spektrale Bereich ist, den der Sensor abdecken soll.

Als optische Beugungselemente werden unter anderem Phasenhologramme, sogenannte Kinoformen, angewandt. Die EP 1 770 349 A1 beschreibt z.B. die Anwendung derartiger Kinoformen in einem lasergestützten Zielsucher. Kinoformen prägen dem einfallenden Licht eine Phasenmodulation auf, die zu dem gewünschten Interferenzmuster in der Bildebene führt. Die Hologramme werden in optische Gläser geätzt. Der Wegunterschied den Licht beim Durchgang der strukturierten Oberfläche erfährt, sorgt für eine Phasenverschiebung, welche destruktive bzw. konstruktive Interferenz zur Erzeugung der gewünschten Lichtverteilung in der Bildebene bewirkt. Wegen der Dispersion der Gläser arbeiten solche Beugungselemente nur für eine festgelegte Designwellenlänge optimal, so dass sie bezüglich der optischen Performance und der Größe des Beugungsmusters nur innerhalb eines relativ begrenzten spektralen Arbeitsbereichs sinnvoll einsetzbar sind.

In der Publikation von J. Bengtsson "Kinoforms designed to produce different fanout patterns for two wavelengths", in APPLIED OPTICS, 10 April 1998 Vol. 37, No. 11 wird die Realisierung von Kinoformen beschrieben, welche als Funktion der Wellenlänge zwei verschiedene Beugungsbilder erzeugen. Das Funktionsprinzip eines Kinoforms ist die wellenlängenspezifische Phasenmodulation, die zum gewünschten Interferenzmuster in der Bildebene führt. Daher arbeitet ein solches diffraktives optisches Element nur für eine Designwellenlänge optimal. Weicht nun die Nutzwellenlänge stark von der Designwellenlänge ab, hat dies zwangsläufig Einfluss auf das Beugungsbild. Es skaliert nicht nur mit der Wellenlänge, sondern die räumliche Verteilung der konstruktiven und destruktiven Interferenz verändert sich ebenso. Letztendlich hat dies zur Folge, dass sich die Energieverteilung in der Bildebene verändert. Zwei physikalische Prinzipien, auf die in der zitierten Veröffentlichung verwiesen wird, sind hierfür maßgeblich: Wird der sehr geringe Unterschied in der Dispersion vernachlässigt, ändert sich zum einen die Periodenlänge mit der Wellenlänge. Andererseits ist die Phasenverschiebung nach Durchgang durch das Kinoform abhängig von der Wellenlänge. In herkömmlichen Kinoformen sind dies eher unerwünschte Effekte, aber in der zitierten Veröffentlichung werden diese Prinzipien gezielt genutzt, um mittels optischer Beugungselemente Licht unterschiedlicher Wellenlänge, respektive Farbe (im Sichtbaren), zu unterscheiden. Betrachtet werden in dieser Veröffentlichung verschiedene Verfahren, um diese physikalischen Prinzipien für das Design von Kinoformen zu nutzen. Es wird eine Unterscheidbarkeit von unterschiedlichen Farben, respektive spektraler Bänder, ermöglicht.

Die US 5,227,859 A beschreibt einen Strahlungsdetektor, welcher ein holographisches optisches Element umfasst. Letzteres ist derart aufgebaut, dass einfallendes kohärentes Licht unterschiedlicher Wellenlängenbänder in unterschiedliche Segmente eines strahlungsempfindlichen Detektors gelenkt wird.

Der Erfindung liegt die Aufgabe zugrunde, eine gattungsgemäße Sensorvorrichtung zu schaffen, der kompakt ausgebildet werden kann und über einen breiten spektralen Arbeitsbereich einsetzbar ist.

Diese Aufgabe wird mit der Vorrichtung nach Patentanspruch 1 gelöst. Vorteilhafte Ausführungen sind Gegenstand von Unteransprüchen.

Gemäß der Erfindung wird der spektrale Arbeitsbereich des Sensors in mehrere, z.B. zwei spektrale Arbeitsbereiche, aufgeteilt. Dazu wird das optische Beugungselement, insbesondere ein Kinoform, derart aufgebaut, das es aus Licht unterschiedlicher Wellenlängenbänder gegeneinander verdrehte Beugungsmuster erzeugt. Es ändert sich also nicht nur die Größe eines Beugungsmusters in Abhängigkeit von der Wellenlänge, sondern mit dem Übergang in ein neues Wellenlängenband ergibt sich eine Verdrehung des Beugungsmusters selbst.

Jedes Beugungsmuster für sich skaliert hinsichtlich seiner Größe - wie bei den bekannten Beugungselementen - mit der Wellenlänge des Lasers. Damit ist die Bestimmung der Laser-Wellenlänge weiterhin möglich.

Die für die Erfindung benötigten Oberflächenstrukturen des optischen Beugungselements lassen sich in herkömmlicher Weise in Substratmaterialien, z.B. Gläser, ätzen und können somit auch in größeren Stückzahlen hergestellt werden.

Besonders vorteilhaft ist das Beugungselement so ausgelegt, dass sich die Abstände zwischen den einzelnen Beugungsordnungen auch in höheren Wellenlängenbändern nicht oder nur wenig ändern. Die Ausdehnung der Beugungsmuster bleibt also in allen Wellenlängenbändern in etwa gleich groß. Vorteilhaft sollten die maximale und die minimale Ausdehnung eines jeden Beugungsmusters für alle Wellenlängenbänder in etwa übereinstimmen. Darüber hinaus kann auch die wellenlängenabhängige Änderung der Ausdehnung innerhalb desselben Wellenlängenbands vergleichsweise gering eingestellt werden.

Durch diese Maßnahmen wird der Anteil der Detektorfläche, der für das Sehfeld des Sensors nicht nutzbar ist, über den gesamten operativen Wellenlängenbereich des Sensors minimiert und der geschilderte Nachteil der herkömmlichen optischen Beugungselemente beseitigt.

Im Ergebnis wird ein kompakter Lasersensor realisiert, der über einen breiten spektralen Arbeitsbereich hinweg einsetzbar ist.

Mit der erfindungsgemäßen Lösung lässt sich somit die Wellenlänge mit zwei Parametern codieren:
- durch das erzeugte Beugungsmuster;
- durch den Abstand der Beugungsordnungen innerhalb des Beugungsmusters.

Mittels einer Bildverarbeitung kann die unterschiedliche Verdrehung der Beugungsmuster sowie der Abstand der einzelnen Beugungsordnungen erkannt werden.

Die Erfindung weist den folgenden weiteren Vorteil auf:
Will man ein Kinoform für einen großen spektralen Arbeitsbereich auslegen, führt das generell zu einem Abfall der optischen Eigenschaften, je mehr sich die genutzte Wellenlänge von der festgelegten Designwellenlänge unterscheidet. Konkret bedeutet das, dass die Effizienz der Beugung des Laserlichts in die Beugungsordnungen stark abfällt und somit die Lichtausbeute für Laserlicht stark sinkt. Entsprechend erschwert dies in der nachfolgenden Verarbeitungskette die Detektion des Lasers. Durch die erfindungsgemäße Aufteilung in mehrere spektrale Arbeitsbereiche wird dieser generelle Nachteil der bekannten Sensoren überwunden, denn nunmehr steht für jedes Wellenlängenband jeweils eine solche Designwellenlänge zur Verfügung, die es erlauben, im jeweiligen Band ein Beugungsbild mit optimaler Ausbeute in den Beugungsordnungen zu erzeugen.

Die Erfindung wird anhand von konkreten Ausführungsbeispielen unter Bezugnahmen auf Fig. erläutert. Es zeigen:
- Fig. 1: das Beugungsbild eines herkömmlichen optischen Beugungselements bei minimaler und maximaler Wellenlänge, wie in der Beschreibungseinleitung beschrieben;
- Fig. 2: zwei unterschiedliche Beugungsbilder aus unterschiedlichen Wellenlängenbändern gemäß der Erfindung;
- Fig. 3: einen Querschnitt durch eine erfindungsgemäße Vorrichtung.

Fig. 2 zeigt ein Beispiel für die Erzeugung zweier unterschiedlicher Beugungsmuster beim Einfall von Strahlung zweier unterschiedlicher Wellenlängenbänder (nicht maßstabsgerecht zu Fig. 1). Diese sollen mit demselben Beugungselement erzeugt werden. Die beiden Beugungsmuster unterscheiden sich dadurch voneinander, dass sie um 45° um die Symmetrieachse gegeneinander verdreht sind. Eine Bildverarbeitung erkennt diese Verdrehung und ordnet die Beugungsmuster dem betreffenden Wellenlängenband zu. Darüber hinaus kann durch den Abstand der Beugungsordnungen innerhalb der Beugungsmuster eine Bestimmung der Laser-wellenlänge durchgeführt werden. Man erkennt auch, dass, obwohl die Beugungsmuster mit unterschiedlichen Wellenlängen erzeugt wurden, die Ausdehnung der Beugungsmuster gleich bleibt.

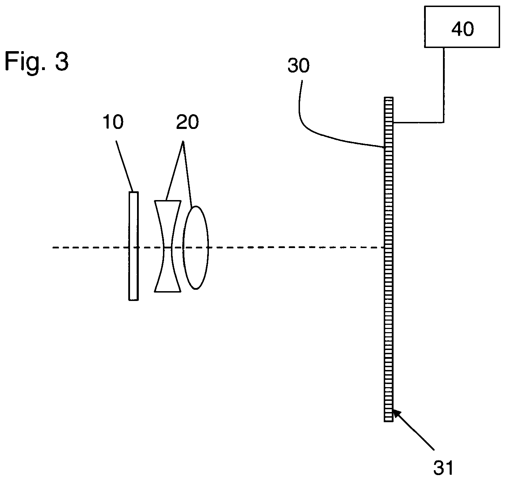

Fig. 3 zeigt beispielhaft den Aufbau einer erfindungsgemäßen Vorrichtung. Er umfasst im Strahlengang ein optisches Beugungselement 10 vor einer Standardoptik 20 und einen Detektor 30 mit Bildfeldmatrix 31. Der Detektor 30 ist mit einer Bildverarbeitungseinrichtung 40 verbunden, die die von dem Beugungselement 10 auf der Bildfeldmatrix 31 erzeugten Beugungsmuster erkennt und einem bestimmten Wellenlängenband zuordnet.

## Patentansprüche

1. Sensor zur Erkennung und Lokalisierung von Laserstrahlungsquellen mit
- einem im Bildfeld einer abbildenden Optik (20) angeordneten strahlungsempfindlichen Detektor (30),
- einer mit dem Detektor (30) verbundenen elektronischen Bildverarbeitungseinrichtung (40), und
- einem im Strahlengang angeordneten optischen Beugungselement (10), **dadurch gekennzeichnet, dass**
die Beugungseigenschaften des optischen Beugungselements (10) derart ausgebildet sind, dass einfallendes Laserlicht unterschiedlicher Wellenlängenbänder jeweils gegeneinander verdrehte Beugungsmuster erzeugen, wobei sich die den einzelnen Wellenlängenbändern zugeordneten Beugungsmuster durch eine Verdrehung um eine Symmetrieachse eines Beugungsmusters unterscheiden und die elektronische Signalauswertungseinrichtung (40) derart eingerichtet ist, dass sie die Verdrehung der Beugungsmuster erkennt und auswertet.

2. Sensor nach Anspruch 1, **dadurch gekennzeichnet, dass** die Beugungseigenschaften des optischen Beugungselements derart ausgebildet sind, dass
- die Ausdehnung der Beugungsmuster bei maximaler Wellenlänge eines jeweiligen Wellenlängenbands für alle Wellenlängenbänder im Wesentlichen gleich ist, und
- die Ausdehnung der Beugungsmuster bei minimaler Wellenlänge eines jeweiligen Wellenlängenbands für alle Wellenlängenbänder im Wesentlichen gleich ist.

3. Sensor nach einem der vorangehenden Ansprüche, **dadurch gekennzeichnet, dass** das optische Beugungselement ein Kinoform ist.

## Claims

1. A sensor for detecting and localizing laser radiation sources, having
- a radiation-sensitive detector (30) situated in the image field of an imaging optical system (20),
- an electronic image processing device (40) that is connected to the detector (30), and
- an optical diffraction element (10) situated in the beam path, **characterized in that** the diffraction properties of the optical diffraction element (10) are designed in such a way that incident laser light of different wavelength bands generates in each case mutually rotated diffraction patterns, wherein the diffraction patterns associated with the individual wavelength bands differ by a rotation about an axis of symmetry of a diffraction pattern, and the electronic signal evaluation device (40) is configured in such a way that it detects and evaluates the rotation of the diffraction pattern.

2. The sensor according to Claim 1, **characterized in that** the diffraction properties of the optical diffraction element are designed in such a way that
- the extent of the diffraction patterns at maximum wavelength of a particular wavelength band is essentially the same for all wavelength bands, and
- the extent of the diffraction pattern at minimum wavelength of a particular wavelength band is essentially the same for all wavelength bands.

3. The sensor according to one of the preceding claims, **characterized in that** the optical diffraction element is a kinoform.

## Revendications

1. Capteur de détection et de localisation de sources de rayonnement laser, comprenant
- un détecteur (30) sensible au rayonnement, disposé dans le champ d'image d'une optique d'imagerie (20),
- un dispositif de traitement d'image électronique (40) relié au détecteur (30), et
- un élément de diffraction optique (10) disposé sur la trajectoire des rayons,
**caractérisé en ce que**
les propriétés de diffraction de l'élément de diffraction optique (10) sont réalisées de telle sorte que la lumière laser incidente de différentes bandes de longueurs d'onde génère respectivement des figures de diffraction décalées en rotation les unes par rapport aux autres, les figures de diffraction attribuées aux bandes de longueurs d'onde individuelles se distinguant par un décalage en rotation autour d'un axe de symétrie d'une figure de diffraction, et le dispositif d'évaluation de signal électronique (40) est aménagé de telle sorte qu'il détecte et évalue le décalage en rotation des figures de diffraction.

2. Capteur selon la revendication 1, **caractérisé en ce que** les propriétés de diffraction de l'élément de diffraction optique sont réalisées de telle sorte que
- les dimensions des figures de diffraction pour une longueur d'onde maximale d'une bande de longueurs d'onde respective sont substantiellement les mêmes pour toutes les bandes de longueurs d'onde, et
- les dimensions des figures de diffraction pour une longueur d'onde minimale d'une bande de longueurs d'onde respective sont substantiellement les mêmes pour toutes les bandes de longueurs d'onde.

3. Capteur selon l'une quelconque des revendications précédentes, **caractérisé en ce que** l'élément de diffraction optique est une plaque de zone de Fresnel.
